# EUROPEAN PATENT APPLICATION

(11) **EP 4 549 494 A1**
(43) Date of publication of application: **07.05.2025**
(21) Application number: 24186406.5
(22) Date of filing: 04.07.2024
(51) Int. Cl.: C08J 5/00, B29B 17/04, B29C 48/07, C08J 5/18, C08J 11/04

(54) **COMPOSITE SHEET, METHOD FOR MANUFACTURING SAME AND HOME APPLIANCE INCLUDING SAME**

(30) Priority: 30.10.2023 KR 20230147287
(71) Applicant: LG Electronics Inc., Yeongdeungpo-gu Seoul 07336 (KR)
(72) Inventor: JEONG, Donghwan, 08592 Seoul (KR); NOH, Hyunwoo, 08592 Seoul (KR); DO, Hongseung, 08592 Seoul (KR); IM, Kihyeong, 08592 Seoul (KR); LEE, Kuhyeong, 08592 Seoul (KR)
(74) Representative: Vossius & Partner Patentanwälte Rechtsanwälte mbB

(57) **Abstract**

A composite sheet, a method for manufacturing the composite sheet, and a home appliance including the composite sheet are provided. A composite sheet according to an embodiment includes a matrix including a base resin which contains a thermoplastic material; and chips by pulverizing waste materials having irregular shapes and coupled by the matrix and the chips partially exposed to an outer surface of the composite sheet, wherein a range of sizes of the chips has from 1mm to 3cm and a temperature of melting point of the chips has 200°C over.

## Description

### BACKGROUND

The present disclosure relates to a composite sheet, a method for manufacturing the composite sheet, and a home appliance including the composite sheet.

Home appliances mainly refer to devices installed in the user's home to help the user with housework, and include refrigerators, air conditioners, air purifiers, vacuum cleaners, cooking devices, dishwashers, clothes care machines, washing machines, and the like.

Recently, home appliances with outer appearances incorporating design elements have been appearing. It has become important for home appliances to have a luxurious outer appearance that harmonizes with the interior decoration as well as the original performance and function.

Meanwhile, as interest in the environment increases, up-cycling attempts are being made to increase value by applying eco-friendly materials made from recycled waste materials to product design, which can improve aesthetics and eco-friendliness at the same time and thus it is gaining attention in the market.

### SUMMARY

An object of the present disclosure is to provide a composite sheet that may simultaneously improve aesthetics and eco-friendliness through the composite sheet using eco-friendly materials, a method for manufacturing the composite sheet, and a home appliance including the composite sheet.

An object of the present disclosure is to provide a composite sheet with excellent mechanical properties such as improved surface hardness, improved strength, and reduced coefficient of thermal expansion, a method for manufacturing the composite sheet, and a home appliance including the composite sheet.

An object of the present disclosure is to provide a composite sheet that includes chips formed of a highly heat-resistant material and may improve safety in the event of a fire, a method for manufacturing the composite sheet, and a home appliance including the composite sheet

A composite sheet according to an embodiment to solve the above problem includes a matrix; and a plurality of chips surrounded by the matrix, at least a portion of which is exposed to the outside, in which the chip has an average size of 1 mm or more and 3 cm or less and a melting point of 200°C or more.

The matrix may be a thermoplastic material.

The matrix may include at least one of PMMA, PC, ABS, PC, PET, PA, PP, and PS.

The chip may be formed by pulverizing waste materials.

The waste material may include artificial marble.

The waste material may include a material containing at least one of PEEK, PTFE, PAI, and PI.

The composite sheet may further include maleic anhydride, in which the waste material may include a thermosetting plastic containing at least one of phenol resin, melamine resin, epoxy resin, urea resin, unsaturated polyester resin, alkyd resin, silicon resin, and polyurethane resin.

The composite sheet may further include maleic anhydride, in which the waste material may include shell.

After extruding a mixture containing a base resin constituting the matrix and the chip into a sheet shape, the surface of the extruded sheet may be etched so that at least a portion of the plurality of the chips is exposed.

The number of chips exposed to the outside from the surface of the sheet may increase as the surface of the sheet is etched.

A method for manufacturing a composite sheet according to an embodiment to solve the above problem includes pulverizing waste materials with a melting point of 200°C or higher to form chips with a size of 1mm or more and 3cm or less; dispersing the chips in a base resin to form a mixture; forming a sheet preform with the mixture; and etching the surface of the sheet preform so that at least a portion of the chip is exposed to the outside.

The base resin may be a thermoplastic material.

The base resin may include at least one of PMMA, PC, ABS, PC, PET, PA, PP, and PS.

The chips may be formed by pulverizing waste materials.

The waste material may include artificial marble.

The waste material may include a material containing at least one of PEEK, PTFE, PAI, and PI.

The waste materials may include thermosetting plastics containing at least one of phenol resin, melamine resin, epoxy resin, urea resin, unsaturated polyester resin, alkyd resin, silicon resin, and polyurethane resin, and the dispersing the chips in the base resin to form a mixture may further include adding maleic anhydride.

The waste materials may include shells, and the dispersing the chips in the base resin to form a mixture may further include adding maleic anhydride.

The etching the surface of the sheet preform may increase the number of chips exposed to the outside from the surface of the sheet preform.

A home appliance according to an embodiment to solve the above problem includes a cabinet forming storage space; a door configured to open and close the storage space; and a door cover coupled to a front of the door, in which the door cover includes the composite sheet of claim 1.

A composite sheet according to an embodiment to solve the above problem includes a matrix including a base resin which contains a thermoplastic material; and chips by pulverizing waste materials having irregular shapes and coupled by the matrix and the chips partially exposed to an outer surface of the composite sheet, in which a range of sizes of the chips has from 1mm to 3cm and a temperature of melting point of the chips has 200°C over.

The matrix includes at least one of PMMA, PC, ABS, PC, PET, PA, PP, and PS.

The chip is formed by pulverizing waste materials.

The waste material includes artificial marble.

The waste material includes a material containing at least one of PEEK, PTFE, PAI, and PI.

The composite sheet may further include maleic anhydride, in which the waste material includes a thermosetting plastic containing at least one of phenol resin, melamine resin, epoxy resin, urea resin, unsaturated polyester resin, alkyd resin, silicon resin, and polyurethane resin.

The composite sheet may further include maleic anhydride, in which the waste material includes shell.

After extruding a mixture containing a base resin constituting the matrix and the chip into a sheet shape, the surface of the extruded sheet is cut so that at least a portion of the plurality of the chips is exposed.

The number of chips exposed to the outside from the surface of the sheet increases as the surface of the sheet is cut.

A method for manufacturing a composite sheet according to an embodiment to solve the above problem includes pulverizing waste materials with a temperature melting point of 200°C over to form chips which have irregular shapes with a size range of 1mm ~ 3cm; mixing the chips in a base resin to form a mixture; manufacturing a sheet preform by heating the mixture; and cutting an outer surface of the sheet preform to partially expose the chips to an outer surface of the composite sheet.

The base resin is a thermoplastic material.

The base resin includes at least one of PMMA, PC, ABS, PC, PET, PA, PP, and PS.

The chips are formed by pulverizing waste materials.

The waste material includes artificial marble.

The waste material includes a material containing at least one of PEEK, PTFE, PAI, and PI.

The waste materials include thermosetting plastics containing at least one of phenol resin, melamine resin, epoxy resin, urea resin, unsaturated polyester resin, alkyd resin, silicon resin, and polyurethane resin, and the mixing the chips in the base resin to form a mixture further includes adding maleic anhydride.

The waste materials include shells, and the mixing the chips in the base resin to form a mixture further includes adding maleic anhydride.

The cutting the surface of the sheet preform increases the number of chips exposed to the outside from the surface of the sheet preform.

A home appliance according to an embodiment to solve the above problem includes a cabinet forming storage space; a door configured to open and close the storage space; and a door cover coupled to a front of the door, in which the door cover includes the composite sheet of claim 1.

The present disclosure may implement upcycling that simultaneously improves aesthetics and eco-friendliness through a composite sheet using eco-friendly materials.

The present disclosure may improve mechanical properties such as improving surface hardness, improving strength, and reducing thermal expansion coefficient of applied home appliances through a composite sheet structure including a matrix and a chip.

The present disclosure, through a composite sheet structure with improved heat resistance including chips formed of a highly heat-resistant material, may prevent products to which the composite sheet is applied from burning from heat in the event of a fire, thereby improving user safety.

### BRIEF DESCRIPTION OF THE DRAWINGS

FIG. 1 is a front view illustrating a home appliance according to one embodiment.
FIG. 2 is a cross-sectional view illustrating a composite sheet according to one embodiment.
FIG. 3 is a flowchart illustrating a method for manufacturing a composite sheet according to one embodiment.
FIG. 4 is a schematic diagram illustrating a process of casting a sheet preform according to one embodiment.
FIG. 5 is a schematic diagram illustrating the process of extruding a sheet preform according to one embodiment.
FIG. 6 is a cross-sectional view illustrating a sheet preform according to one embodiment.

### DETAILED DESCRIPTION OF THE EMBODIMENTS

Hereinafter, some embodiments of the present disclosure will be described in detail with reference to the accompanying drawings. It is noted that the same or similar components in the drawings are designated by the same reference numerals as far as possible even if they are illustrated in different drawings. In addition, in describing the embodiments of the present disclosure, if it is determined that a detailed description of a related known configuration or function disturbs understanding of the embodiment of the present disclosure, the detailed description will be omitted.

In addition, in the description of the embodiments of the present disclosure, the terms such as first, second, A, B, (a) and (b) may be used. These terms are only used to distinguish the component from other components, and the essence, sequence, or order of the corresponding component is not limited by the term. It should be understood that when an element is described as being "connected," "coupled", or "joined" to another element, the former may be directly connected or jointed to the latter or may be "connected", coupled" or "joined" to the latter with a third component interposed therebetween.

For convenience of explanation and understanding, we would like to define direction. Hereinafter, based on the floor on which the home appliance 1 is installed, the direction toward the floor may be referred to as a downward direction, and the direction toward the high surface of the cabinet opposite to that may be referred to as an upward direction. Additionally, the direction toward the door may be referred to as the front direction, and the direction toward the inside of the cabinet based on the door may be referred to as the rear direction. In addition, when you want to talk about an undefined direction, you may define and explain the direction based on each drawing.

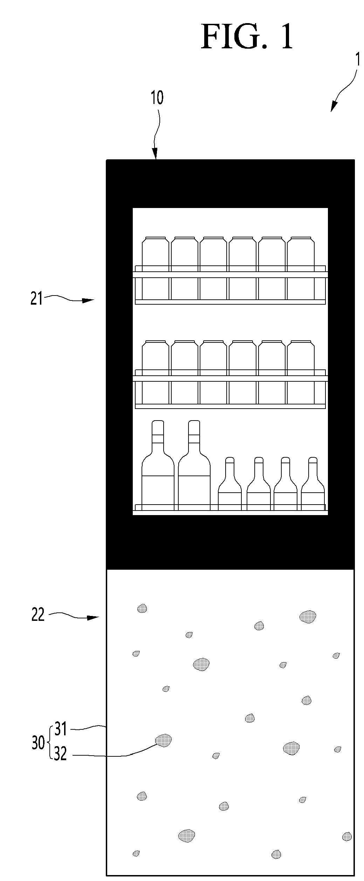

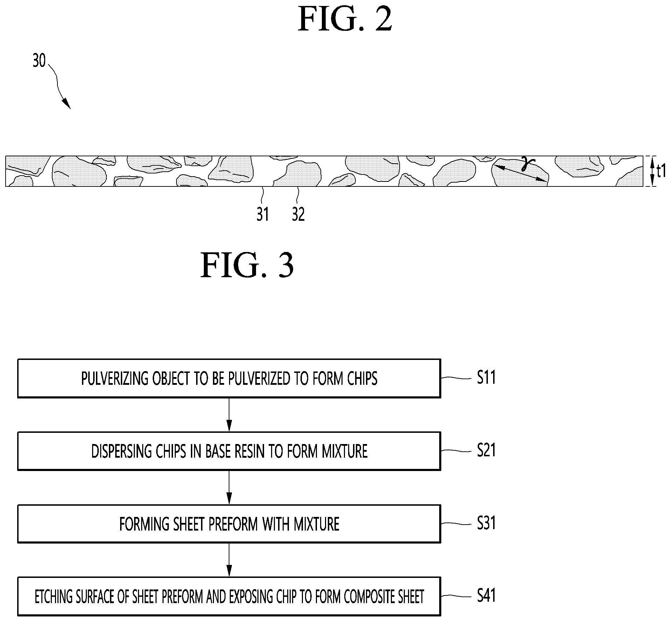

FIG. 1 is a front view illustrating a home appliance according to one embodiment and FIG. 2 is a cross-sectional view illustrating a composite sheet according to one embodiment.

Hereinafter, a home appliance 1 to which the composite sheet 30 according to the present disclosure is applied will be described with reference to FIGS. 1 and 2. In this specification, the description is based on the refrigerator 1 as an example of the home appliance 1, but the home appliance 1 is not limited thereto and the present disclosure may be applied to other types of home appliances 1 including an air conditioner, an air purifier, a vacuum cleaner, a cooking device, a dishwasher, a clothes care machine, a washing machine, and the like.

The home appliance 1 according to an embodiment of the present disclosure may have an outer appearance formed by a cabinet 10 forming a storage space and a door 20 opening and closing the storage space of the cabinet 10.

For example, the cabinet 10 may form a storage space divided into upper and lower sections, and a refrigerating chamber may be formed at the upper portion and a freezing chamber may be formed at the lower portion.

The door 20 may include a refrigerating chamber door 21 that opens and closes the refrigerating chamber and a freezing chamber door 22 that opens and closes the freezing chamber 12. For example, the refrigerating chamber door 21 may be referred to as a first door, and the freezing chamber door 22 may be referred to as a second door.

The refrigerating chamber door 21 is rotatably connected to the cabinet 10 by a hinge and may be a rotary door that opens and closes the refrigerating chamber by rotation. Additionally, the freezing chamber door 22 may also be rotatably connected to the cabinet 10 by a hinge and configured to open and close the freezing chamber by rotation. However, the freezing chamber door 22 is not limited to this and may be configured to be pulled in and out in a drawer style to open and close the freezing chamber.

Of course, in this embodiment, for convenience of explanation and understanding, the refrigerator 1 is described as an example in which the refrigerating chamber is disposed at the upper portion and the freezing chamber is disposed at the lower portion, but the present disclosure does not limited to the form of the refrigerator 1 and may be applied to any type of refrigerator 1 equipped with a door.

The freezing chamber door 22 may include a composite sheet 30 that constitutes the outer appearance of the front surface. The composite sheet 30 may have a flat plate shape with a first thickness t1. The composite sheet 30 may be coupled to the front surface of the door body of the freezing chamber door 22. Here, the composite sheet 30 may be referred to as a door cover. For example, the composite sheet 30 may be attached to the door body through an adhesive member disposed between the door body and the composite sheet. The adhesive member may be disposed along the edge of the composite sheet 30. The adhesive member may be a double-sided adhesive tape or a magnet, but is not limited thereto and may be determined in various ways according to the material of the door body.

The first thickness t1 of the composite sheet 30 may be adjusted in various ways through surface etching. That is, the first thickness t1 of the composite sheet 30 may be adjusted in various ways by cutting the surface. As an example, the first thickness t1 of the composite sheet 30 may be 3 mm or more and 10 mm or less.

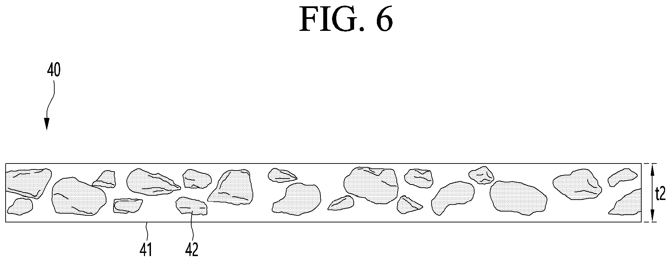

The composite sheet 30 may include a matrix 31 and a plurality of chips 32 surrounded by the matrix 31. A plurality of chips 32 may be distributed and disposed in the matrix 31. At least a portion of the plurality of chips 32 may be exposed to the outside. Additionally, the plurality of chips 32 may have an irregular shape as shown in FIGs 2 and 6. The above structure may be formed by etching a sheet-shaped sheet preform 40 (see FIG. 6) formed by mixing the material forming the matrix 31 and a plurality of chips 32. The surface of the composite sheet 30 is etched and then polished, so that the surface of the composite sheet 30 may have an arithmetic average roughness of 2 *µ*m or more and 3 *µ*m or less.

In the composite sheet 30, the plurality of chips 32 may be etched and exposed to the outside. The size r of the chip 32 may mean the maximum length among the arbitrary lengths of each chip 32. The size r of the chip 32 may be 1 mm or more and 3 cm or less. In order to form the sheet preform 40 of the composite sheet 30 having a certain thickness and expose the plurality of chips 32 to the outside through etching, it may be advantageous for the size of the chips 32 to be 1 mm or more. Meanwhile, after forming the sheet preform 40, the composite sheet 30 is formed through etching and in this case, in order for the etching to occur smoothly, it may be advantageous for the size r of the chip 32 to be 3 cm or less.

For example, the average value of the size r of the plurality of chips 32 may be 1 mm or more and 3 cm or less, 2 mm or more and 2 cm or less, 3 mm or more and 1 cm or less, or 4 mm or more and 6.7 mm or less.

The first thickness t1 of the composite sheet 30 may be adjusted to be smaller than the average size r of the plurality of chips 32. Accordingly, chips 32 may be exposed on the surface of the composite sheet 30. In the composite sheet 30, the number of chips 32 entirely surrounded by the matrix 31 may be smaller than the number of chips 32 at least partially exposed to the outside. For example, the number of chips 32 exposed on the surface of the composite sheet 30 is 50% or more, 60% or more, 70% or more, 80% or more, or 90% or more based on the total number of chips 32.

As described above, the composite sheet 30 may have an outer appearance with a plurality of chips 32 exposed to the matrix 31. Accordingly, the composite sheet 30 may be referred to as a terrazzo sheet having a terrazzo pattern with a marble-like texture. Meanwhile, terrazzo patterns are attracting attention as patterns that form interior decoration or the outer appearance design of products as they can reproduce the texture and feel of natural marble and create a luxurious atmosphere.

The chips 32 included in the composite sheet 30 may be formed by pulverizing waste materials. Therefore, the composite sheet 30 according to one embodiment may form a terrazzo pattern by recycling waste materials, thereby improving the aesthetics and eco-friendliness of the applied product at the same time. In other words, the composite sheet 30 according to one embodiment may provide upcycling value to the home appliance 1 applied to the outer appearance.

In addition, the composite sheet 30 has a composite structure including the chip 32, so that it can have high surface hardness, high strength, and low thermal expansion coefficient compared to the plastic material commonly used for the outer appearance of the home appliance 1. Accordingly, the home appliance 1 to which the composite sheet 30 is applied may have improved durability against the external environment.

Therefore, the composite sheet 30 may be used not only as a home appliance 1 but also as a construction material and building material. For example, the composite sheet 30 may be used as an indoor material for interior decoration.

Hereinafter, each component included in the composite sheet 30 will be described.

The matrix 31 has a sheet shape and may be made of a material that is easy to process. Matrix 31 may include a thermoplastic resin. The matrix 31 may be included in an amount of 65 parts by weight or more and 85 parts by weight or less based on 100 parts by weight of the total weight of the composite sheet 30.

For example, the matrix 31 may be made of polymethyl methacrylate (PMMA), polycarbonate (PC), acrylonitrile butadiene styrene (ABS), and polyethylene terephthalate (PET), polyamide (PA), polypropylene (PP), and polystyrene (PS).

In the composite sheet 30, the chip 32 may be fixed to the matrix 31. The chip 32 may include a highly heat-resistant material. The chip 32 may be made of a material that does not melt into the matrix 31 during the process of manufacturing the sheet preform 40 through methods such as casting, extrusion, and injection. The melting point of the chip 32 may preferably be 200°C. or higher.

Chips 32 may be formed by pulverizing waste materials. For example, the waste may be any one of artificial marble, super engineering plastic, thermosetting plastic, and high heat-resistant bio material. In other words, the chip 32 may be formed by pulverizing any one of artificial marble, super engineering plastic, thermosetting plastic, and high heat-resistant bio material. The chips 32 may be included in an amount of 8 parts by weight or more and 30 parts by weight or less based on 100 parts by weight of the total weight of the composite sheet 30.

Hereinafter, examples of the above-described materials that can be used as the chip 32 will be described.

Artificial marble may be commercial artificial marble. For example, artificial marble may include 35 parts by weight or more and 65 parts by weight or less of aluminum hydroxide, 25 parts by weight or more and 45 parts by weight or less of methylmethacrylate (MMA), 8 parts by weight or more and to 30 parts by weight or less of polymethylmethacrylate (MMA), 0.5 parts by weight or more and 5 parts by weight or less of ethylene glycol dimethylacrylate (EGDMA) based on 100 parts by weight of the total weight.

In the case of artificial marble, the plastic material included in the chip 32 may chemically combine with the material forming the matrix 31 in a high-temperature environment created during processes such as casting, extrusion, and injection to form a sheet shape. For example, in a high-temperature environment, materials such as methyl methacrylate (MMA) or polymethyl methacrylate (PMMA) contained in artificial marble may chemically bond with the materials forming the matrix 31. Accordingly, the bonding strength between the chip 32 and the matrix 31 may be improved.

Super engineering plastic may include at least one of polyether ether ketone (PEEK), polytetrafluoroethylene (PTFE), polyamide imide (PAI), and polyimide (PI).

In the case of super engineering plastic, the plastic material contained in the chip 32 may chemically bond with the material forming the matrix 31 in a high temperature environment formed during processes such as casting, extrusion, and injection to form a sheet shape. For example, in a high-temperature environment, material such as polyether ether ketone (PEEK), polytetrafluoroethylene (PTFE), polyamide imide (PAI), or polyimide (PI) included in the super engineering plastic may chemically bond with the materials forming the matrix 31. Accordingly, the bonding strength between the chip 32 and the matrix 31 may be improved.

Thermosetting plastic may include at least one of phenol resin, urea resin, melamine resin, epoxy resin, urea resin, unsaturated polyester resin, alkyd resin, silicon resin, and polyurethane resin.

High heat-resistant biomaterials may include waste shells such as oyster shells and clam shells. The highly heat-resistant bio material may contain 89 parts by weight or more and 99 parts by weight or less of calcium carbonate (CaCOs) based on the total weight.

As will be described later, when the material forming the chip 32 is a thermosetting plastic or a highly heat-resistant bio material, the composite sheet 30 may further include maleic anhydride.

The composite sheet 30 may further include pigment. Pigments may be added to impart color to the composite sheet 30. For example, titanium dioxide (TiO2) may be added to give white color to the composite sheet 30, and a mixture of titanium dioxide (TiO₂) and Chrome antimony titanium buff rutile (C.I. Pigment Brown 24) may be added to give yellow color and a mixture of titanium dioxide (TiO₂), blue pigment of Solvent Blue 97, and red pigment of ferric oxide may be added to give indigo color. The pigment may be included in an amount of 4 parts by weight or more and 6 parts by weight or less based on 100 parts by weight of the total weight of the composite sheet 30.

The composite sheet 30 may further include a UV stabilizer. For example, the UV stabilizer may include at least one of a polymer UV absorber, a hydroxyphenol benzotriazole series UV absorber, and Tinuvin-P. The UV stabilizer may be included in an amount of 1 part by weight or more and 2 parts by weight or less based on 100 parts by weight of the total weight of the composite sheet 30.

The composite sheet 30 may further include maleic anhydride according to the material of the chip 32. Maleic anhydride may be added to increase the bonding strength between the materials forming the matrix 31 and the materials forming the chip 32 when the chemical bonding strength between them is weak. For example, maleic anhydride may be added when the material making up the chip 32 is thermosetting plastic or a highly heat-resistant bio material. For example, maleic anhydride may be included in an amount of 1 part by weight or more and 3 parts by weight or less based on 100 parts by weight of the total weight of the composite sheet 30.

The composite sheet 30 according to one embodiment can provide upcycling value that simultaneously improves aesthetics and eco-friendliness to the home appliance 1 applied using eco-friendly materials.

The composite sheet 30 according to one embodiment has a structure including a matrix 31 and a chip 32, which may improve mechanical properties such as improving surface hardness, improving strength, and reducing thermal expansion coefficient of the home appliance 1 to which the composite sheet 30 is applied.

The composite sheet 30 according to one embodiment has a structure with improved heat resistance including chips 32 made of a high heat resistance material, which prevents the product to which the composite sheet 30 is applied from burning from heat in the event of a fire so that user safety may be improved.

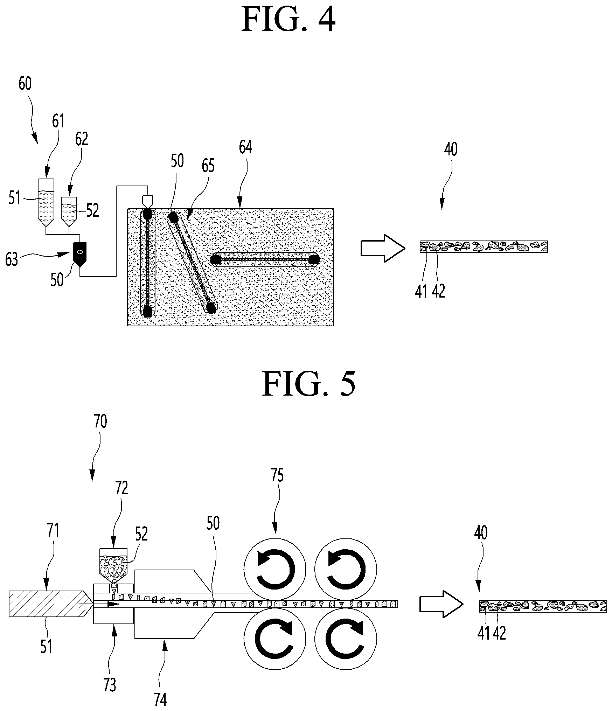

FIG. 3 is a flowchart illustrating a method for manufacturing a composite sheet according to one embodiment, FIG. 4 is a schematic diagram illustrating a process of casting a sheet preform according to one embodiment, FIG. 5 is a schematic diagram illustrating the process of extruding a sheet preform according to one embodiment, and FIG. 6 is a cross-sectional view illustrating a sheet preform according to one embodiment.

Referring to FIGS. 3 to 6, the method for manufacturing a composite sheet according to an embodiment may include a step S11 of pulverizing an object to be pulverized to form chips, a step S21 dispersing the chips in a base resin to form a mixture, a step S31 forming a sheet preform using the mixture, and a step S41 forming a composite sheet by etching the surface of the sheet preform to expose chips.

First, the step (S11) of pulverizing the object to be pulverized to form chips may be performed. The object to be pulverized may be a waste material. The waste material may be any one of artificial marble, super engineering plastic, thermosetting plastic, and high heat-resistant bio material.

Pulverizing of the object to be pulverized may be performed until the size r of the chip 32 reaches a certain level. The size r of the chip 32 may be 1 mm or more and 3 cm or less. In order to form the sheet preform 40 of the composite sheet 30 having a certain thickness and expose the plurality of chips 32 to the outside through etching, it may be advantageous for the size of the chips 32 to be 1 mm or more. Meanwhile, after forming the sheet preform 40, the composite sheet 30 is formed through etching and in this case, in order for the etching to occur smoothly, it may be advantageous for the size r of the chip 32 to be 3 cm or less.

For example, the average size r of the plurality of chips 32 may be 1 mm or more and 3 cm or less, 2 mm or more and 2 cm or less, 3 mm or more and 1 cm or less, or 4 mm or more and 6.7 mm or less.

After the step S11 of pulverizing the object to be pulverized to form chips, a step S21 of dispersing the chips in the base resin to form a mixture may be performed. The pulverized chips 32 may become the chips 32 of the composite sheet 30, and the base resin 51 may become the matrix 31 of the composite sheet 30.

The step S21 of forming a mixture by dispersing the chips in the base resin may further include a step of adding maleic anhydride according to the material of the pulverized chips 52 used. Maleic anhydride may be added to increase the bonding strength between the base resin 51 and the pulverized chip 52 when the chemical bonding strength between them is weak. For example, maleic anhydride may be added when the material making up the pulverized chip 52 is thermosetting plastic or a highly heat-resistant bio material. For example, maleic anhydride may be included in an amount of 1 part by weight or more and 3 parts by weight or less based on 100 parts by weight of the total weight of the mixture.

After the step S21 of dispersing in the base resin to form a mixture, the step S31 of forming a sheet preform using the mixture may be performed. This step and the step S21 of dispersing in the base resin to form a mixture may be performed together.

This step may be performed by various sheet forming processes such as casting, extrusion, and injection. The sheet forming process, such as casting, extrusion, and injection, may include a step of heating to a temperature of 200°C or less. This step will be described with reference to FIGS. 4 and 5. The step of forming the sheet preform 40 through a casting process will be described with reference to FIG. 4, and the step of forming the sheet preform 40 through an extrusion process will be described with reference to FIG. 5.

Referring to FIG. 4, a step of forming the sheet preform 40 through a casting process may be performed through the casting system 60. As an example, the casting system 60 may include a first storage part 61 in which the base resin 51 is stored, a second storage part 62 in which the pulverized chips 52 are stored, a mixing part 63 in which the base resin 51 and the pulverized chips 52 are mixed, a water tank 64 in which the sheet preform 40 is hardened, and a casting 65 that forms the shape of the sheet preform 40.

The casting process may be performed at high temperatures of 200°C or lower. Accordingly, the step of forming the sheet preform 40 through a casting process may include a step of heating the mixture 50. The melting point of the crushed chips 52 may be higher than the casting process temperature. Therefore, during the casting process, the chip 52 may maintain the shape thereof without melting in the base resin 51.

The base resin 51 stored in the first storage part 61 and the pulverized chips 52 stored in the second storage part 62 may be supplied to the mixing part 63. The base resin 51 and the pulverized chips 52 supplied to the mixing part 63 may be mixed to form the mixture 50. The mixture 50 may be put into a casting to take the shape of a sheet preform 40. The mixture 50 added to the casting 65 may be hardened in the water tank 64. When curing is complete, the sheet preform 40 may be formed. The sheet preform 40 will be described later with reference to FIG. 6.

Referring to FIG. 5, the step of forming the sheet preform 40 through an extrusion process may be performed through an extrusion system 70. As an example, the extrusion system 70 may include a first storage part 71 in which the base resin 51 is stored, a second storage part 72 in which the pulverized chips 32 are stored, a mixing part 73 in which the base resin 51 and the pulverized chips 32 are mixed, a moving part 74 in which the mixture 50 is moved, and an extrusion part 75 in which the mixture 50 is extruded to form the sheet preform 40.

The extrusion process may be performed at high temperatures of 200°C or lower. Accordingly, the step of forming the sheet preform 40 through an extrusion process may include a step of heating the mixture 50. The melting point of the pulverized chips 52 may be higher than the extrusion process temperature. Therefore, during the extrusion process, the chip 52 may maintain the shape thereof without melting into the base resin 51.

The base resin 51 stored in the first storage part 71 and the pulverized chips 32 stored in the second storage part 72 may be supplied to the mixing part 73. The base resin 51 and the pulverized chips 32 supplied to the mixing part 73 may be mixed to form the mixture 50. The mixture 50 may be provided to the extrusion part 75 through the moving part 74. The mixture 50 may be extruded through the extrusion part 75 to form the sheet preform 40.

Referring to FIG. 6, the sheet preform 40 may include a matrix preform 41 and a plurality of chips 42 surrounded by the matrix preform 41. In the sheet preform 40, the number of chips 42 entirely surrounded by the matrix preform 41 may be greater than the number of chips 42 at least partially exposed to the outside. For example, the number of chips 42 exposed on the surface of the sheet preform 40 may be less than 50%, less than 40%, less than 30%, less than 20% or less than 10% based on the total number of chips 42.

The sheet preform 40 may have a second thickness t2. The second thickness t2 may be greater than the composite sheet 30, which is the final product. In other words, the thickness of the sheet preform 40 may be reduced through subsequent processing to change into a composite sheet 30 having a first thickness t1. The second thickness t2 may be larger than the size r of the chip 42. Accordingly, in the sheet preform 40, the number of chips 42 entirely surrounded by the matrix preform 41 may be greater than the number of chips 42 at least partially exposed to the outside.

After a step S31 of forming a sheet preform using the mixture, a step S41 of forming a composite sheet by etching the surface of the sheet preform to expose chips may be performed. Through this step, the sheet preform 40 having a second thickness t2 may be changed into a composite sheet 30 having a first thickness t1 smaller than the second thickness t2. In this step, the surface etching of the sheet preform 40 may be performed on both sides of the sheet preform 40. Accordingly, the chip 32 is exposed on both sides of the composite sheet 30 formed after this step, and the terrazzo pattern may be confirmed.

As the sheet preform 40 is changed into the composite sheet 30 through this step, the number of chips 32, at least some of which are exposed to the outside, may increase. When the surface of the sheet preform 40 is etched, the matrix preform 41 and the chip 42 may be etched to form a flat surface. In other words, in the composite sheet 30, the exposed surface of the matrix 31 and the exposed surface of the chip 32 may be aligned with each other.

After the surface etching step of the sheet preform 40, a surface polishing step of polishing the roughened surface through surface etching may be further performed. Through this, the arithmetic average roughness of the surface of the composite sheet 30 may be secured to be 2 *µ*m or more and 3 *µ*m or less.

According to the method for manufacturing the composite sheet 30 according to an embodiment, upcycling value that the composite sheet 30 is manufactured using eco-friendly materials to simultaneously improve aesthetics and eco-friendliness in the home appliance 1 to which the composite sheet 30 is applied may be given.

According to a method for manufacturing a composite sheet according to an embodiment, a composite sheet 30 having a structure including a matrix 31 and a chip 32 is manufactured, and thus the mechanical properties of the home appliance 1 to which the composite sheet 30 is applied can be improved, such as improved surface hardness, improved strength, and reduced thermal expansion coefficient.

According to a method for manufacturing a composite sheet according to an embodiment, a composite sheet 30 having a structure with improved heat resistance including chips 32 made of a high heat resistance material is manufactured, and thus in the event of a fire, the product to which the composite sheet 30 is applied may be prevented from burning from heat, thereby improving user safety.

## Claims

1. A composite sheet comprising:
a matrix (31) including a base resin which contains a thermoplastic material; and
chips (32) having irregular shapes and coupled by the matrix (31), the chips (32) being partially exposed to an outer surface of the composite sheet,
wherein a range of sizes of the chips (32) has from 1 mm to 3cm and a temperature of melting point of the chips is 200°C or more.

2. The composite sheet of claim 1,
wherein the matrix (31) includes at least one of PMMA, PC, ABS, PC, PET, PA, PP, and PS.

3. The composite sheet of claim 1 or 2, wherein the chip (32) is formed by pulverizing waste materials.

4. The composite sheet of claim 3,
wherein the waste material includes artificial marble and/or a material containing at least one of PEEK, PTFE, PAI, and PI.

5. The composite sheet of claim 3, further comprising:
maleic anhydride,
wherein the waste material includes a thermosetting plastic containing at least one of phenol resin, melamine resin, epoxy resin, urea resin, unsaturated polyester resin, alkyd resin, silicon resin, and polyurethane resin.

6. The composite sheet of claim 3 or 4, further comprising:
maleic anhydride,
wherein the waste material includes shell.

7. The composite sheet of any one of the preceding claims,
wherein, after extruding a mixture containing a base resin constituting the matrix (31) and the chips (32) into a sheet shape, the surface of the extruded sheet is cut so that at least a portion of the plurality of the chips (32) is exposed,
wherein the number of chips (32) exposed to the outside from the surface of the sheet preferably increases as the surface of the sheet is cut.

8. A method for manufacturing a composite sheet comprising:
pulverizing waste materials with a temperature melting point of 200°C or more to form chips (32) which have irregular shapes with a size range of 1 mm to 3cm;
mixing the chips (32) in a base resin to form a mixture;
manufacturing a sheet preform by heating the mixture; and
cutting an outer surface of the sheet preform to partially expose the chips (32) to an outer surface of the composite sheet.

9. The method for manufacturing a composite sheet of claim 8,
wherein the base resin is a thermoplastic material,
wherein the base resin preferably includes at least one of PMMA, PC, ABS, PC, PET, PA, PP, and PS.

10. The method for manufacturing a composite sheet of claim 8 or 9,
wherein the chips (32) are formed by pulverizing waste materials.

11. The method for manufacturing a composite sheet of claim 10,
wherein the waste material includes artificial marble and/or a material containing at least one of PEEK, PTFE, PAI, and PI.

12. The method for manufacturing a composite sheet of claim 10,
wherein the waste materials include thermosetting plastics containing at least one of phenol resin, melamine resin, epoxy resin, urea resin, unsaturated polyester resin, alkyd resin, silicon resin, and polyurethane resin, and
wherein the mixing the chips (32) in the base resin to form a mixture further includes adding maleic anhydride.

13. The method for manufacturing a composite sheet of claim 10,
wherein the waste materials include shells, and
wherein the mixing the chips (32) in the base resin to form a mixture further includes adding maleic anhydride.

14. The method for manufacturing a composite sheet of any one of claims 8 to 13,
wherein the cutting the surface of the sheet preform increases the number of chips exposed to the outside from the surface of the sheet preform.

15. A home appliance comprising:
a cabinet (10) forming storage space;
a door (20) configured to open and close the storage space; and
a door cover coupled to a front of the door (20),
wherein the door cover includes the composite sheet of any one of claims 1 to7.
